# EUROPÄISCHE PATENTANMELDUNG

(11) **EP 1 197 540 A2**
(43) Veröffentlichungstag der Anmeldung: **17.04.2002**
(21) Anmeldenummer: 01121316.2
(22) Anmeldetag: 06.09.2001
(51) Int. Cl.: C09J 103/02, A63H 33/04

(54) **Klebeverbindung eines Spielbausteins und Verfahren zur Herstellung der Klebeverbindung**

(30) Priorität: 13.10.2000 DE 10050976
(71) Anmelder: Artur Fischer TIP GmbH & Co. KG, 72176 Waldachtal (DE)
(72) Erfinder: Fischer, Artur, Senator E.H. Prof.Dr.phil.h.c., 72178 Weinhalde (DE)

(57) **Zusammenfassung**

Die Erfindung betrifft eine Klebeverbindung insbesondere zum Beflocken einer Modelllandschaft sowie ein Verfahren zur Herstellung der Klebeverbindung. Die Erfindung schlägt vor, Spielbausteine, die aus einem festen und durch Anfeuchten klebenden Schaum, beispielsweise aus aufgeschäumten Stärkematerial, bestehen, zu Flocken zu zerkleinern, die Modelllandschaft mit Stärke in flüssiger Form zu besprühen und die Flocken auf die besprühte Modelllandschaft zu streuen.

## Beschreibung

Die Erfindung betrifft eine Klebeverbindung eines Spielbausteins gemäß dem Oberbegriff des Anspruchs 1. Des weiteren betrifft die Erfindung ein Verfahren zur Herstellung der Klebeverbindung gemäß dem Oberbegriff des Anspruchs 7.

Beispielsweise aus der DE 197 03 038 sind Spielbausteine bekannt, die aus einem festen Schaum bestehen, der durch Anfeuchten klebend wird. Die bekannten Spielbausteine sind aus einem extrudierten und aufgeschäumten (expandierten) Stärkematerial, also aus Stärke oder stärkehaltigem Material, hergestellt. Ein Herstellungsverfahren für derartige Spielbausteine ist offenbart in der DE 40 16 597 A1. Es sind allerdings auch andere Herstellungsverfahren und andere Ausgangsmaterialien denkbar. Die bekannten Spielbausteine werden zwar durch Anfeuchten klebend und sind dadurch miteinander oder auch mit einem anderen Element, beispielsweise mit einer Unterlage aus einem anderen Material verklebbar, jedoch ist eine Festigkeit der Klebeverbindung insbesondere bei der Verklebung mit einem anderen Element aus nicht-klebendem Material gering.

Der Erfindung liegt die Aufgabe zugrunde, eine Klebeverbindung sowie ein Verfahren zu ihrer Herstellung vorzuschlagen, die eine höhere Festigkeit aufweist.

Diese Aufgabe wird erfindungsgemäß durch die Merkmale der Ansprüche 1 und 7 gelöst. Zur Herstellung der erfindungsgemäßen Klebeverbindung wird Stärke in flüssiger Form auf den Spielbaustein und/oder das andere Element aufgebracht und der Spielbaustein und das andere Element werden aneinander gefügt, beispielsweise aneinander gedrückt. Durch die Feuchtigkeit der flüssigen Stärke wird der Spielbaustein angefeuchtet und dadurch klebend. Zusätzlich wirkt die in flüssiger Form aufgebrachte Stärke klebend und erhöht auf diese Weise die Festigkeit der Klebeverbindung. Es wird insbesondere in Wasser gelöste Stärke verwendet. Für die Klebeverbindung kann beispielsweise eine Mischung aus handelsüblicher, flüssiger Stärke mit einem Anteil von 30 - 50 % und Wasser mit einem Anteil von 50 - 70 % Verwendung finden. Mit Stärke in flüssiger Form ist auch zähflüssige oder pastöse Stärke gemeint.

Das andere Element, mit dem der durch Anfeuchten klebende Spielbaustein verklebt ist, kann ein weiterer, ebensolcher Spielbaustein sein. Bei einer Ausgestaltung der Erfindung besteht das andere Element aus einem anderen, insbesondere nicht-klebenden Material. Für derartige Verbindungen hat die erfindungsgemäße Klebeverbindung wegen ihrer erhöhten Festigkeit den Vorteil, dass sie eine für den Aufbau von Spielzeugmodellen üblicherweise ausreichende Festigkeit aufweist. Das andere Material, mit dem der Spielbaustein verklebt ist, kann insbesondere eine Unterlage aus Papier, Pappe oder dgl. sein, auf der beispielsweise ein Modell mit den bekannten Spielbausteinen aufgebaut wird. Auch kann das andere Element, das beispielsweise aus Papier oder Pappe besteht, ein Verstärkungselement des Spielmodells bilden.

In bevorzugter Ausgestaltung der Erfindung dient die Klebeverbindung zum Beschichten beispielsweise von Modelllandschaften oder dgl. mit einem schüttfähigen Material, das aus dem festen, durch Anfeuchten klebenden Schaum besteht und das vor der Verklebung zu einem schüttfähigen Material, insbesondere zu Flocken zerkleinert wird oder ist. Die Stärke in flüssiger Form wird auf eine Unterlage aufgebracht, die anschließend mit dem zu Flocken oder schüttfähigem Material zerkleinerten, festen Schaum bestreut wird. Die Unterlage besteht beispielsweise aus Papier, Pappe oder Pappmaschee und bildet die Modelllandschaft. Der zu Flocken oder schüttfähigem Material zerkleinerte, feste Schaum verklebt mit der Unterlage, es handelt sich um eine Art Beflockung. Auf diese Weise lassen sich wirklichkeitsnah aussehende Modellrasenflächen oder Modelllandschaftsflächen herstellen, es lassen sich beschneite Flächen nachbilden oder durch Beflocken von verästelten Gestellen Modellbäume herstellen. Die Gestelle können ebenfalls aus dem festen Schaum bestehen, beispielsweise aus miteinander verklebten Spielbausteinen oder aus Teilen, die aus den Spielbausteinen geschnitten sind.

Die Stärke in flüssiger Form kann beispielsweise mit einem Pinsel oder einem Lappen aufgebracht werden. In bevorzugter Ausgestaltung der Erfindung wird die Stärke in flüssiger Form aufgesprüht.

## Patentansprüche

1. Klebeverbindung eines Spielbausteins, der aus einem festen und durch Anfeuchten klebenden Schaum besteht, mit einem anderen Element, **dadurch gekennzeichnet, dass** zur Verklebung Stärke in flüssiger Form auf den Spielbaustein und/oder das andere Element aufgebracht ist.

2. Klebeverbindung nach Anspruch 1, **dadurch gekennzeichnet**, das die Stärke in Wasser gelöst ist.

3. Klebeverbindung nach Anspruch 1, **dadurch gekennzeichnet, dass** das andere Element aus einem nicht-klebenden Material besteht.

4. Klebeverbindung nach Anspruch 3, **dadurch gekennzeichnet, dass** das andere Element Papier, Pappe oder dgl. ist.

5. Klebeverbindung nach Anspruch 1, **dadurch gekennzeichnet**, das der feste Schaum vor der Verklebung zu einem schüttfähigem Material zerkleinert ist.

6. Klebeverbindung nach Anspruch 5, **dadurch gekennzeichnet, dass** der feste Schaum zu Flocken zerkleinert ist.

7. Verfahren zur Herstellung einer Klebeverbindung eines Spielbausteins, der aus einem festen und durch Anfeuchten klebenden Schaum besteht, mit einem anderen Element, **dadurch gekennzeichnet, dass** Stärke in flüssiger Form auf den Spielbaustein und/oder das andere Element aufgebracht wird und dass der Spielbaustein und das andere Element aneinander gefügt werden.

8. Verfahren nach Anspruch 7, **dadurch gekennzeichnet, dass** die Stärke in Wasser gelöst ist.

9. Verfahren nach Anspruch 7, **dadurch gekennzeichnet, dass** die Stärke durch Sprühen aufgebracht wird.

10. Verfahren nach Anspruch 7, **dadurch gekennzeichnet, dass** der feste Schaum zu einem schüttfähigen Material zerkleinert ist und durch Streuen auf das andere Element aufgetragen wird, nachdem die Stärke in flüssiger Form auf das andere Element aufgebracht worden ist.

11. Verfahren nach Anspruch 10, **dadurch gekennzeichnet, dass** der feste Schaum zu Flocken zerkleinert ist.
